# EUROPEAN PATENT SPECIFICATION

(11) **EP 4 382 762 B1**
(45) Date of publication and mention of the grant of the patent: **08.04.2026**
(21) Application number: 22211572.7
(22) Date of filing: 06.12.2022
(51) Int. Cl.: F16D 65/12

(54) **COATED WEAR ELEMENT**
BESCHICHTETES VERSCHLEISSELEMENT
ÉLÉMENT D'USURE REVÊTU

(43) Date of publication of application: 12.06.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 80939 München (DE); HÖS, Levente, 1047 Budapest (HU); HOLLOSI, Mate, 1097 Budapest (HU); KLINGNER, Matthias, 82276 Adelshofen (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU); KRETZ, Philipp, 80939 München (DE)

(56) References cited:
- WO-A1-2021/124100
- DE-A1- 102011 012 320
- US-A1- 2004 031 652
- US-A1- 2022 154 792

## Description

The present invention refers to a wear element for frictional force transmission, a friction brake, a vehicle and a method for producing such a wear element.

Current discs for disc brakes are usually made from steel or grey cast iron, which is partly removed over the lifetime due to wear during a frictional force transmission between the disc and the brake pad. This removed steel is exposed to the environment as fine particle emission. An already known solution in order to avoid this fine particle emission is a coating of the brake disc, which reduces wear significantly. As a consequence, the coating lasts for huge distances, in which the wear of the brake disc is nearly zero. Then the coating is removed due to the wear, now in a maintenance process the brake-disc could be coated again.

The wear status of the coating is nearly impossible to measure, since the coating itself is very thin and the tolerances of the disc thickness itself has a similar magnitude. Thus, measuring the disc thickness has no information gain. More complicated measurement procedures require a dismantling of the brake disc, which is effortful.

Reducing the wear and the fine particle emission of the brake disc is a major step in the process of further reducing the fine particle emission of the complete truck. A coated disc could pave the way for reaching a new legislation level of the European fine particle emission norm for commercial vehicles (Euro 7 or similar).

In this context, US 2004/031652 A1 relates to a brake disk having axial friction surfaces, in particular, an internally ventilated brake disk having two friction rings that are joined via connecting elements, whereby one of the axial outer surfaces of the brake disk is provided with a metallic non-ceramic coating. US 2022/154792 A1 relates to a brake disk with a surface which is structured in order to increase the adhesion of a coating on the surface, wherein the structuring of the surface comprises at least one recess, the depth of which decreases as the depth of the recess increases wherein the at least one recess has the shape of a spiral structure. DE 10 2011 012320 A1 relates to a method for the production of a brake disc from a basic body, which has a friction ring surface. The method includes the steps of the provision of the basic body and the roughening of the friction ring surface by directing an electron beam at the friction ring surface. A defined quantity of recesses per mm² of the friction ring surface is created in the friction ring surface. The arrangement of the recesses with respect to one another is predetermined and each recess has a predetermined depth and shape. Then a coating is applied to the friction ring surface without the implementation of an chemical etching step.

However, if due to the increasing wear of the brake disc the coating of the brake disc is removed, fine particle emission increases suddenly, since the material of the brake disc that had been coated during manufacturing with a protective coating of the brake disc is now in direct frictional contact with the brake pads during braking. Therefore, the respective Euro norm cannot be fulfilled.

Based on this problem, a brake disc is regarded as a special embodiment of a general wear element that is configured to get in frictional contact with a friction counter element for frictional force transmission.

Therefore, it is an object of the present invention to provide a wear element that has reduced particle emission in the worn state compared to a wear element of the state of the art.

This object is reached by the subject-matter of the independent claims. Advantageous embodiments are subject-matter of the dependent claims.

According to the invention, a wear element for frictional force transmission is provided. The wear element comprises a base element, a protective coating and a friction surface for frictional force transmission. The base element comprises a non-even surface with at least one projection, wherein the protective coating is provided on the non-even surface to at least partially form the friction surface in an unworn state of the wear element.

According to one aspect of the invention, the protective coating completely covers the non-even surface and in particular the at least one projection. I.e. in an unworn state, the friction surface is formed only by the protective coating, wherein due to increasing wear of the friction surface, material of the protective coating is reduced. Therefore, the at least one projection gets finally uncovered and forms a part of the friction surface. This corresponds to a worn state of the wear element.

According to another aspect, in the unworn state of the wear element, the protective coating partially covers the at least one projection. I.e. the friction surface is partially formed by the protective coating, wherein another part of the friction surface is formed by the uncovered part of the at least one projection. In particular, this configuration is advantageous if the use of the protective coating alone would lead to a friction coefficient that is too low to fulfil the requirements for of the friction surface. Therefore, the friction coefficient of the whole friction surface may be increased, when a percentage of area of the friction surface is formed by the at least one projection, wherein the other percentage of area may be formed by the protective coating. Compared to the aspect above, wherein the coating completely covers the at least one projection, this aspect leads to higher particle emissions due to the at least one projection as part of the friction surface. However, compared to the state of the art, the friction coefficient of the friction surface is adjustable.

If the non-even surface comprises at least two projections, these at least two projections may be provided evenly spaced on the non-even surface. In particular, if the non-even surface is a circular surface or a ring shaped surface, these at least two projections may be spaced by an angle of 180°. Three projections may be evenly spaced by an angle of 120° and four projections may be evenly spaced by an angle of 90°. In general, the angle for an even arrangement of the projections on such a non-even surface may be calculated by dividing 360° by the number of projections on the non-even surface. However, other designs of the non-even surface and other arrangements of at least two projections are possible as well.

Preferably, the at least one projection extends 1 mm or less in a direction from the base element to the at least one friction surface and perpendicular to the at least one friction surface.

The non-even surface may be a plane or regular surface, wherein the at least one projection provided on the non-even surface is an irregularity, whereby the non-even surface is characterised.

Preferably, the at least one projection is provided on the whole non-even surface.

According to a particular embodiment of the invention, the non-even surface may be provided only on a portion of the base element. I.e. the friction surface may extend beyond this portion and there be formed by another portion of the base element.

Preferably, the protective coating comprises or consists of tungsten carbide or titanium carbide. Preferably, the base element and/or the at least one projection comprises or consists of steel or of grey cast iron. Further preferably, the base element and the at least one projection are formed as one piece.

The protective coating itself needs to have sufficient properties itself. So that also an unworn disc with 100% coating achieves a sufficient result during the frictional force transmission. In particular, the friction coefficient of the protective coating must fulfil a certain threshold.

Advantageously, the protective coating protects the base element from wear due to the frictional force transmission, since the protective coating forms at least partially the friction surface. In the unworn state, the non-even surface of the base element may be covered completely or at least partially by the protective coating. The coating may form a flat or even friction surface. Here the base element has a non-even surface due to the at least one projection, wherein the protective coating compensates this by a non-constant layer thickness. Applying the protective coating by die coating may lead to such a result. Alternatively, the protective coating may also form a non-even surface. In particular this may be the result of applying the protective coating with a constant layer thickness, wherein the protective coating approximates the shape of the non-even surface, in particular of the at least one projection. Advantageously, this embodiment leads to a friction surface that may comprise channels for fluids (e.g. water or oil) that are unintentionally on the friction surface and that would negatively affect the frictional force transmission. The fluids may be led away from the friction surface via the channels. The shape of the channels may be designed by the space between individual projections and by the thickness of the protective layer.

For frictional force transmission, a friction counter element may be in contact with the at least one friction surface and therefore, the protective coating wears off with each frictional force transmission. Since the non-even surface is coated at least partially by the protective coating, wear due to frictional force transmission is reduced with respect to the material of the base element or completely avoided. When the protective layer is worn, the non-even surface, in particular one or more of the projections on the non-even surface are now no longer covered by the protective coating and form a part of the friction surface. If frictional force transmission shall be carried out now, the friction counter element gets in contact with the uncovered projections. However, due to the non-even surface, there is still protective coating between the uncovered projections. Therefore, the friction surface in this worn state is formed partially by the protective coating and partially by the uncovered projections. This leads to the advantage compared to the state of the art that when the protective coating is worn out, in particular rubbed off completely or partially, the particle emissions due to the wear of the uncovered base element are reduced, since only the uncovered projections are subject of wear and in contact with a friction counter element. The at least one friction surface comprises still areas between the uncovered projections formed by the protective coating. Therefore, compared to the state of the art, wherein an even surface without projections is used, the area of material of the base element which is in contact with the friction counter element is reduced and therefore, the particle emissions are reduced as well.

Further, according to the present invention, the at least one projection is provided radially to the rotational axis with a radial orientation of the at least one projection. When the at least one projection is provided radially to the rotational axis, advantageously, the protective coating is supported against lateral forces applied during the frictional force transmission from a friction counter element that is in contact with the at least one friction surface. The support of these lateral forces may be realized in parallel to the at least one friction surface by supporting the lateral forces by a side face of the at least one projection.

In another embodiment not claimed and not forming part of the present invention, the at least one projection is provided concentrically to the rotational axis. An at least one projection extending around the rotational axis in a circular manner may be provided. This at least one projection may advantageously be formed by milling a groove around the rotational axis or by turning on a lathe, wherein the at least one projection is then formed by the part of the base element that was not removed. As further manufacturing processes, erosive methods are possible that may use specialized tools for grinding. Further, embossing the base element e.g. by using a roller is possible as well. Further, when the wear element is worn, this state is visible, since a pattern of concentric circles emerges on the at least one friction surface. These circles may be optically distinguishable since they consist of different materials (the material of the protective coating and the material of the at least one projection).

Further, if the at least one projection comprises an increasing cross-section area in a direction from the at least one friction surface to the base element and perpendicular to the at least one friction surface, the pattern changes due to wear and the areas formed by the at least one projection increase whereby the areas formed by the protective coating decrease.

Different designs of the wear element of the projections and of the coating are possible. These aspects and further aspects are described in the following as advantageous embodiments of the invention.

Preferably, in the unworn state, the at least one projection is partially or completely covered by the protective coating. A complete covering of the at least one projection has the consequence that the protective coating alone forms the friction surface in the unworn state of the wear element. The projection as part of the base element does not form a part of the friction surface in the unworn state according to this design. Only when the wear of the wear element increases, the protective layer gets worn off and the at least one projection becomes uncovered. In this worn state the friction surface is formed by the at least one projection that is now uncovered and by the protective coating that is located on the non-even surface between the projections. According to another aspect, in the unworn state, the at least one projection on the non-even surface is not completely covered by the protective coating. Instead, the at least one projection on the non-even surface is partially covered by the protective coating. In comparison to the complete covering of the projection, less material of the protective coating is needed to form the friction surface, if it is assumed that the geometry of the non-even surface and of the at least one projection is identical. However, according to this aspect, a friction surface is formed comprising a surface formed partially of the protective coating that is provided on the non-even surface between the at least oneprojections and partially of the at least one projection. Starting from the unworn state, the at least one projection is subject to wear during frictional force transmission when the friction surface is in contact with a friction counter element. However, compared to the state of the art, wherein an even surface without projections is used, the area of material of the base element which is in contact with the friction counter element is reduced and therefore, the particle emissions are reduced as well.

Preferably, the cross-section area of the at least one projection is constant or increasing in a direction from the at least one friction surface to the base element and perpendicular to the at least one friction surface. I.e. projections comprising increasing cross-sections form an increasing percentage of the friction surface with increasing wear, since the at least one projection is worn off from a relatively small cross-section to a bigger cross-section. If the at least one projection comprises constant cross-section areas there are the following possible states depending of the wear of the wear element:
A) In the unworn state, if the protective coating covers the at least one projection completely, no particle emissions due to wear of the at least one projection are generated, since, in this state, the at least one projection is not part of the at least one friction surface. In this state the at least one friction surface is located above the at least one projection. The only particle emission that occurs due to wear is caused by the protective coating in this state. However, these emissions are significantly lower compared to particle emissions caused by the at least one projection.
B) If the at least one projection is uncovered from the protective coating due to wear during the frictional force transmission, particle emissions are generated.
C) There may be a third state: If the at least one projection is configured to be completely worn off, frictional force transmission is then carried out by contacting the friction counter element with the surface of the wear element that had comprised at least one projection to form the non-even surface. Since there are no more projections on this surface any more since they have been worn off, the surface is now even. Since there are no more projections on the surface, the protective coating is worn off in this state as well. I.e. in this state, the biggest amount of particle emissions occurs, since the friction counter element is now in direct contact with the base element and the friction surface is now formed only by the base element without any material of the protective coating. This refers to a wear element, in particular a brake disc, known from the state of the art without any protective coating.

In addition to the aspect of the increased particle emissions, the transitions from state A) to state B) and from state B) to state C) may cause changes in of other properties of the wear element as well. As the percentage of area of the at least one projection is increased due to wear of the protective coating, the friction coefficient and/or the thermal properties of the friction surface may change. This could result in a changed, at worst reduced, brake performance. Further, the wear speed of the wear element may now change, at worst increase, since the material of the at least one projection or of the base element (e.g. steel) is worn off more easily during frictional force transmission. As a result after some time also the rotatory stiffness of the brake disc may decrease, which is safety relevant. However, by shaping the projections with an increasing cross-section area in a direction from the at least one friction surface to the base element and perpendicular to the at least one friction surface transition between the states A), B) and C) may be smoother and the reduced brake performance may not occur abruptly.

Embodiments comprising only partially covered projections with constant cross-section areas are in the second state B) as described above when the wear element is unworn. When wear increases, they stay in the second state B). Optionally, they transit to the third state C) when wear occurs further. However, these embodiments are never in the first state A).

According to this embodiment, the transition between the states A) and B) and further between the states B) and C) is relatively hard. I.e. coming from state A), as soon as the protective coating is worn off such that the at least one projection is uncovered, the wear element is now in state B). In this state, the particle emissions due to the additional wear of the projections have increased. However, this particle emissions stay constant due to the constant cross-section areas of the at least one projections. Further, the particle emissions increase again, when the at least one projection is completely worn off and the wear element is now in state C). I.e. there are sudden changes in the particle emissions when the wear element changes from state A) to B) and from B) to C), wherein the emissions are nearly constant when the wear element is in the respective state.

By shaping the at least one projection with increasing cross-section area, in particular with a continuously or gradually increasing cross-section area, continuously or gradually increasing particle emission in state B) can be realized. I.e. with increasing wear of the wear element, the friction surface is formed of the protective coating and of the at least one projection, wherein the area percentage of the at least one projection increases and of the protective coating decreases.

The at least one projection preferably comprises a convex or a concave shape. A concave shape allows storing protective coating material in the concave recess to form a part of the friction surface.

Preferably, the at least one projection is shaped like a saw tooth, a triangle, a trapezoid, a cam or a part of a sphere. These embodiments of the at least one projection are examples for embodiments with an increasing cross-section area in a direction from the at least one friction surface to the base element and perpendicular to the at least one friction surface.

According to a particular embodiment, at least two projections may be connected with each other. Further preferably, the connected projections may form spaces. These spaces may be formed as holes in a surface formed of the connected projections. In particular, the spaces may comprise a ground surface that acts as the non-even surface, wherein the material forming the projections is provided on that surface.

According to a particular embodiment of the invention, the connected projections may form a surface with blindholes.

Preferably, the at least one projection is formed integrally with the base element. I.e. the at least one projection consists of the same material as the base element. In particular, the base element and the non-even surface with the at least one projection may be produced by casting or by removing of material from the base element to form the non-even surface with the at least one projection.

Alternatively, the at least one projection is formed as a separate part attached to a surface of the base element to form the non-even surface. I.e. the at least one projection may be detached for maintenance or replacement, when the at least one projection is worn.

According to one aspect of the invention, the at least one friction surface is configured to get in contact with a friction counter element for frictional force transmission between the wear element and the friction counter element, wherein the friction counter element is pressed on the at least one friction surface. In particular, the at least one friction surface is subject to wear upon contact with the friction counter element during frictional force transmission. Preferably, the friction counter element is pressed perpendicular onto the friction surface. Further preferably, for establishing the contact with the friction counter element, the wear element is configured to be moved towards the friction counter element and/or the friction counter element is configured to be moved towards the wear element.

Preferably, in an unworn state, the at least one friction surface comprises a percentage of area of 100 % or less but larger than 0 % consisting of the protective coating, wherein in a worn state, the percentage of area consisting of the protective coating is decreased compared to the unworn state. I.e. the particle emissions due to wear of the base element are reduced compared to a wear element of the state of the art, wherein in the worn state, the protective coating is completely worn off. Additionally or alternatively, in the worn state, the at least one friction surface comprises a percentage of area greater than 0% of material of the base element.

Preferably, the wear element comprises a rotational axis and is configured to rotate around this axis. According to this embodiment, the wear element may be used for frictional force transmission to a rotating element like a rotating shaft the wear element is attached to.

Preferably, the wear element is configured as a disc with an axis concentric to the rotational axis of the wear element. Preferably, at least one side of the disc the rotational axis is oriented perpendicular to is configured as the at least one friction surface.

According to a particular embodiment of the friction brake according to claim 9, the wear element is configured as a brake disc and the at least one friction surface is configured to get into frictional contact with at least one brake pad acting as friction counter element. According to this embodiment, the wear element may be used for frictionally transmitting a braking force applied by the friction counter element to a wheel of a vehicle. Preferably, both sides of the brake disc are configured as friction surfaces, in particular as described above, and configured to get in frictional contact with at least one brake pad acting as friction counter element on each side. Both friction surfaces are configured as the surfaces of the brake disc oriented perpendicular to the rotational axis of the brake disc. Preferably, the friction surfaces are formed as concentric ring surfaces with respect to the rotational axis of the wear element.

According to the particular embodiment above, the invention provides a wear element that can be used for frictional force transmission in particular in a friction brake. Advantageously, compared to the state of the art, the particle emissions of the wear element are decreased, since in a worn state of the wear element, the friction counter element is not immediately in exclusive contact with the material of the base element. Instead, a friction surface comprising material of the protective coating and of the at least one projection, is provided in the worn state and therefore, a smoother transition from the unworn state to the worn state is realized.

According to a further aspect of the invention, the wear element may be configured to be refurbished, when the protective coating is at least partially worn off, preferably when the at least one projection is uncovered from the protective coating and in particular when a pattern as mentioned above is visible. In this state that may correspond to state B) as mentioned above, refurbishing of the protective coating may be carried out, wherein a new protective layer is applied to the wear element to at least partially cover the at least one projection and to form a new friction surface. Preferably, for that, remaining material of the old protective coating in particular between the projections is removed first.

In the following, further aspects of the invention are described. For the person skilled in the art it is clear that features and aspects of the wear element described above, may be transferred to these aspects to describe preferred embodiments according to these aspects as well.

According to a further aspect of the invention, a friction brake is provided, comprising
- a wear element as defined in claims 1 to 8 and
- a friction counter element configured to get into frictional contact with the at least one friction surface of said wear element.

Preferably, the friction brake is configured as a disc brake, wherein the wear element is configured as the brake disc as described above, wherein the friction brake comprises at least one friction counter element configured to get in frictional contact with one of the friction surfaces.

According to a further aspect of the invention, a vehicle, in particular a commercial vehicle, is provided, as defined in claim 12.

According to a further aspect of the invention, a method for producing a wear element is provided, as defined in claim 13. The method comprises the steps:
- providing of a base element with a surface comprising at least one projection to form a non-even surface and
- applying a protective coating to the non-even surface, wherein
   the at least one projection is partially covered by the coating and wherein the at least one projection and the coating form a friction surface in an unworn state of the wear element configured to get in contact with a friction counter element for frictional force transmission, or
   wherein the at least one projection is completely covered by the coating in an unworn state of the wear element wherein the coating forms the friction surface.

Preferably, the step of providing of the base element comprises a step of casting the base element and/or a step wherein material of the base element is removed or added to form the at least one projection. For example, material of the base element may be removed by milling or drilling, wherein the at least one projection is formed by the material of the base element that was not removed. Further, adding material may comprise a step, wherein the at least one projection as a separate part is attached to the wear element for example in an adhesive manner or by welding.

The protective coating may be applied to the non-even surface by a powder-coating method or by a liquid-coating method. According to another aspect of the invention, die coating may be carried out for applying the protective coating.

For a person skilled in the art, it is clear that the method may be carried out in such way that as a result a wear element according to the embodiments as described above is provided. I.e. for example, the at least one projection is provided in a radial way with respect to a rotational axis of the wear element.

In the following, embodiments are described, wherein the embodiments according to figures 2a-b, 3a-c and 4 do not form part of the present invention and wherein reference is made to the attached drawings.

In detail,
Figures 1a-c show a first embodiment of a wear element according to the invention,
Figures 2a-b show a second embodiment of a wear element according an embodiment of the disclosure not claimed,
Figures 3a-c show a third embodiment of a wear element according to an embodiment of the disclosure not claimed and
Figure 4 shows a friction brake according to an embodiment of the disclosure not claimed.

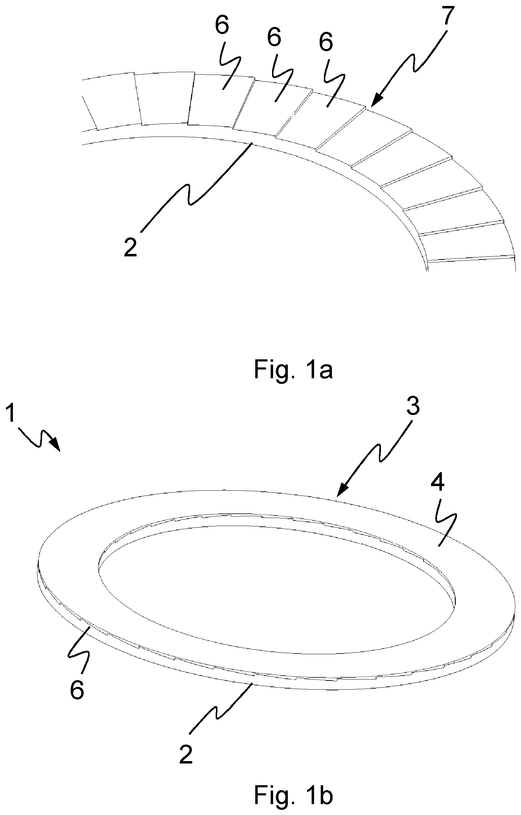

**Figures 1a****-c** show a first embodiment of a wear element according to the invention.

In Figure 1a, a simplified partial perspective view of a base element 2 of the wear element 1 is shown. The base element 2 is configured as a disc or disc ring.

On the upper side of the base element 2 a non-even surface 7 is provided, wherein the non-even surface 7 comprises projections 6 comprising a saw tooth shape and provided radially to the centre of the base element 2.

Figure 1b shows a perspective view of the wear element 1, wherein the projections 6 of the base element 2 are completely covered by a protective coating 3, wherein a friction surface 4 is formed by the protective coating 3 on the upper side in the drawing. In this unworn state of the wear element 1, the projections 6 are completely covered by the protective coating 3 and frictional force transmission to a friction counter element (not shown) may take place only via the material of the protective coating 3.

If the wear element 1 is provided rotatable clockwise around its centre, the protective coating may support the friction force applied by the friction counter element to the steep sides of the projections 6. This is an advantage of the radial orientation of the projections compared to a concentric design. Further, due to the saw tooth design, an optical check of the wear state is possible, since the percentages of area of the friction surface 4 formed by the projections 6 increase when the wear element 1 is more and more worn, wherein the percentages of area of the friction surface 4 formed by the protective coating 3 decrease.

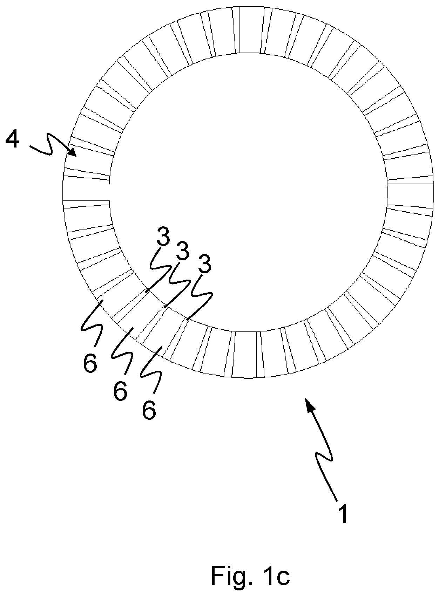

Figure 1c shows a top view of the wear element 1 in such a worn state. Here, an alternating pattern of the protective coating 3 and the partially uncovered projections 6 appear, wherein the friction surface 4 is formed by this alternating pattern.

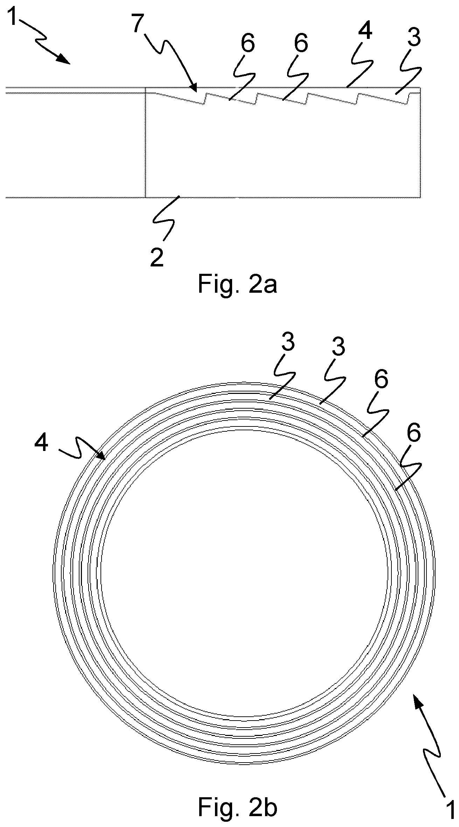

**Figures 2a****-b** show a second embodiment of a wear element according to an embodiment of the disclosure not claimed.

As it can be seen by Figure 2a showing a cross sectional view of a wear element 1, that is shaped like a disc or a disc ring, projections 6 shaped like saw-teeth are concentrically provided on the base element 2 to form a non-even surface 7.

The projections 6 are completely covered by a protective coating 3 in this unworn state. I.e. the friction surface 4 is formed completely by the material of the protective coating 3. When the protective coating 3 above the projections 6 is worn off the projections 6 are partially uncovered.

This state is shown in Figure 2b. Here the state of wear can easily be verified by checking the radial distances between the alternating ring pattern. For example, the radial distance between one ring consisting of the protective coating 3 to the next ring consisting of the protective coating 3 can be used as a wear indicator, wherein the wear has increased when the distance has increased. Alternatively, a distance between two rings consisting of the material of the projections 6 may be used as such an indicator as well. However, with increasing of wear, the radial distance between these rings decreases.

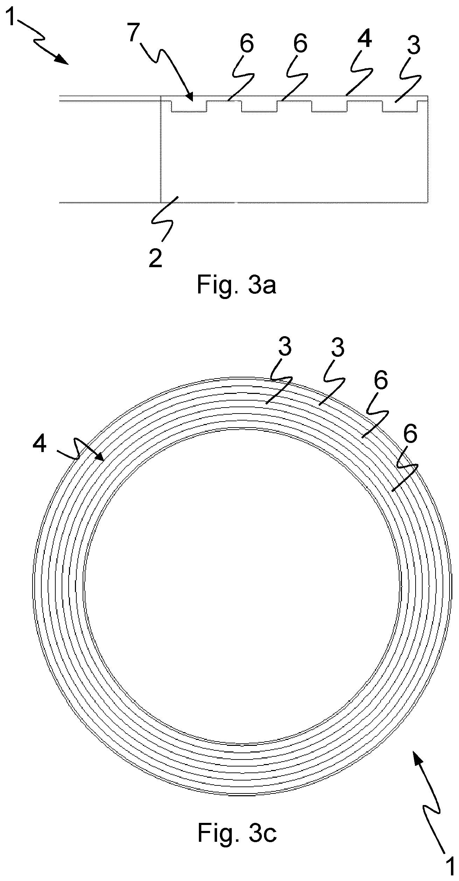

**Figures 3a****-c** show a third embodiment of a wear element according to an embodiment of the disclosure not claimed.

This embodiment is similar to the embodiment shown by the Figures 2a-b. Here, as it can be seen in Figure 3a, instead of a saw-tooth shape, the projections 6 comprise a unitary step shape, wherein the projections 6 are separated by grooves and the protective coating 3 covers the projections 6 and the grooves to form a friction surface 4 consisting exclusively of the material of the protective coating 3 in this unworn state.

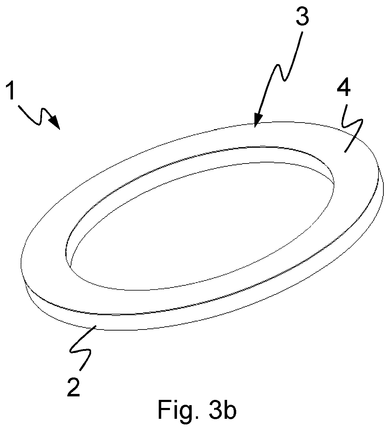

Figure 3b shows a perspective view of the unworn wear element 1, wherein the friction surface 4 is completely formed by the protective coating 3.

When the wear of the wear element 1 increases, the protective coating 3 is rubbed off and the projections 6 are uncovered. In this state, the friction surface comprises areas consisting of the material of the protective coating 3 and other areas consisting of the projections 6 and a concentric ring pattern emerges as it can be seen in Figure 3c showing a top view of the wear element 1. Here, due to the constant cross sectional area of the projections in a direction to the base element, it can only be seen that the wear element 1 is in a worn state with uncovered projections 6, however, no evaluation of the wear state is possible, since the area percentages of the friction surface consisting of material of the projections 6 and of the protective coating 3 stays constant during increasing wear.

However, forming projections 6 according to this unitary step shape is easier to realise, since the projections, or the grooves between the projections can for example be created by milling.

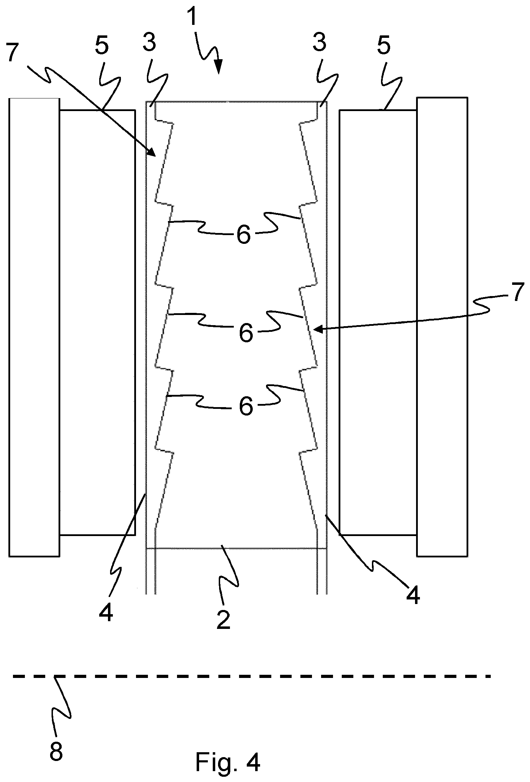

**Figure 4** shows a friction brake according to an embodiment of the disclosure not claimed.

A cross section of a friction brake, in detail a disc brake, is shown. The wear element 1 acts as a brake disc that is oriented perpendicular to the drawing plane. The wear element 1 comprises a base element 2 that is provided rotatable around an axis extending in the drawing plane in a horizontal direction. For simplicity, all parts of the disc brake under the rotational axis are not shown.

The base element 2 comprises projections 6 on each side (in the drawing the left and right side of the base element 2). These projections 6 form a non-even surface 7 of the base element 2, respectively. The projections 6 comprise the shape of concentric saw teeth with respect to the rotational axis 8, however, other shapes and orientations as described above are possible as well.

The non-even surface 7 is coated with a protective coating 3, wherein the projections 6 in this unworn state of the wear element 1 are completely covered by the protective coating 3. However, according to other aspects of the invention, the protective coating may only partially cover the projections 6 in the unworn state as described above.

The outer surfaces of the wear element 1 face to the left and to the right in the drawing. The rotational axis 8 is oriented perpendicular to these outer faces. These outer faces form friction surfaces 4. These friction surfaces 4 are configured to get in frictional contact with the brake pads of the disc brake acting as friction counter elements 5. These friction counter elements 5 are fixed only movable in a direction in parallel to the rotational axis 8. I.e. they are only movable in a horizontal direction in the drawing. To establish a frictional contact between the friction surfaces 4 and the respective friction counter element 5, the friction counter elements 5 are moved towards the respective friction surface 4. I.e. the left friction counter element 5 is moved to the right and the right friction counter element 5 is moved to the left. To apply the frictional force to the wear element 1, the friction counter elements 5 are pressed onto the respective friction surface 4, leading to a braking effect to the wear element 1 rotating around the rotational axis 8.

In the drawings or in general as a further aspect of the invention, it can easily be seen that the protective coating 3 not only covers the projections 6. Further, in the unworn state, there is a material reserve of the protective coating 3 above the projections 6. I.e. to uncover the projections 6 due to wear and to reach a state, wherein the friction surface 4 comprises percentages of area of the material of the protective coating 3 and percentages of area of the material of the projections 6, this material reserve has to be worn off first. Therefore, to extend the life cycle of the wear element 1, the material reserve of the protective coating 3 may be increased.

In particular, when the wear element is used as a brake disc, the invention allows a smooth transition from a coated wear element to a partially or no longer coated wear element. This gives an operator time and a mileage window, in which wear can be detected and a maintenance of the brake can be accomplished without violating the respective Euro norm.

### LIST OF REFERENCE SIGNS

- 1: wear element
- 2: base element
- 3: protective coating
- 4: friction surface
- 5: friction counter element
- 6: projection
- 7: non-even surface
- 8: rotational axis

## Claims

1. Wear element (1) for frictional force transmission, comprising
a base element (2), a protective coating (3) and a friction surface (4) for frictional force transmission, wherein
the base element (2) comprises a non-even surface (7) with at least one projection (6), wherein the protective coating (3) is provided on the non-even surface (7) to at least partially form the friction surface (4) in an unworn state of the wear element (1), and
the wear element (1) comprises a rotational axis and is configured to rotate around this axis, **characterized in that**
the at least one projection (6) is provided radially to the rotational axis with a radial orientation of the at least one projection (6).

2. Wear element (1) according to claim 1, wherein
in the unworn state, the at least one projection (6) is partially or completely covered by the protective coating (3).

3. Wear element (1) according to one of the preceding claims, wherein
the cross-section area of the at least one projection (6) is constant or increasing in a direction from the at least one friction surface (4) to the base element (2) and perpendicular to the at least one friction surface (4).

4. Wear element (1) according to one of the preceding claims, wherein
the at least one projection (6) comprises a convex or a concave shape, and/or
the at least one projection (6) is shaped like a saw tooth, a triangle, a trapezoid, a cam or a part of a sphere.

5. Wear element (1) according to one of the preceding claims, wherein
the at least one projection (6) is formed integrally with the base element (2).

6. Wear element (1) according to one of the claims 1 to 4, wherein
the at least one projection (6) is formed as a separate part attached to a surface of the base element (2) to form the non-even surface (7).

7. Wear element (1) according to one of the preceding claims, wherein
in an unworn state, the at least one friction surface (4) comprises a percentage of area of 100 % or less but larger than 0 % consisting of the protective coating (3), wherein in a worn state, the percentage of area consisting of the protective coating (3) is decreased compared to the unworn state, and/or wherein
in the worn state, the at least one friction surface (4) comprises a percentage of area greater than 0% of material of the base element (2).

8. Wear element (1) according to any one of the preceding claims, wherein
the wear element (1) is configured as a disc with an axis concentric to the rotational axis, wherein at least one side of the disc the rotational axis is oriented perpendicular to is configured as the at least one friction surface (4).

9. Friction brake comprising
- a wear element (1) according to one of the claims 1 to 8 and
- a friction counter element (5) configured to get into frictional contact with the at least one friction surface (4) of said wear element (1).

10. Friction brake according to claim 9, wherein
the at least one friction surface (4) is configured to get in contact with a friction counter element (5) for frictional force transmission between the wear element (1) and the friction counter element (5), wherein the friction counter element (5) is pressed on the at least one friction surface (4), wherein
the at least one friction surface (4) is subject to wear upon contact with the friction counter element (5) during frictional force transmission.

11. Friction brake according to claim 9 or 10, wherein
the wear element (1) is configured as a brake disc and the at least one friction surface (4) is configured to get into frictional contact with at least one brake pad acting as friction counter element (5).

12. Vehicle, in particular a commercial vehicle, comprising
- a wear element (1) according to one of the claims 1 to 8 or
- a friction brake according to any one of the claims 9 to 11.

13. Method for producing a wear element (1) according to one of the claims 1 to 8 comprising the steps:
- providing of a base element (2) with a surface comprising at least one projection (6) to form a non-even surface (7) and
- applying a protective coating (3) to the non-even surface (7), wherein
the at least one projection (6) is partially covered by the coating (3) and wherein the at least one projection (6) and the coating (3) form a friction surface (4) in an unworn state of the wear element (1) configured to get in contact with a friction counter element (5) for frictional force transmission, or
wherein the at least one projection (6) is completely covered by the coating (3) in an unworn state of the wear element (1) wherein the coating (3) forms the friction surface (4).

14. Method according to claim 13, wherein
providing of the base element (2) comprises a step of casting the base element (2) and/or a step wherein material of the base element (2) is removed or added to form the at least one projection (6).

## Patentansprüche

1. Verschleißelement (1) zur Reibungskraftübertragung, umfassend
ein Basiselement (2), eine Schutzbeschichtung (3) und eine Reibfläche (4) zur Reibungskraftübertragung, wobei
das Basiselement (2) eine unebene Oberfläche (7) mit zumindest einem Vorsprung (6) umfasst, wobei die Schutzbeschichtung (3) auf der unebenen Oberfläche (7) bereitgestellt ist, um in einem nicht verschlissenen Zustand des Verschleißelements (1) zumindest teilweise die Reibfläche (4) zu bilden; und
das Verschleißelement (1) eine Drehachse umfasst und dazu konfiguriert ist, sich um diese Achse zu drehen, **dadurch gekennzeichnet, dass**
der mindestens eine Vorsprung (6) radial zur Drehachse mit einer radialen Orientierung der mindestens eine Vorsprung (6) bereitgestellt ist.

2. Verschleißelement (1) nach Anspruch 1, wobei
im nicht verschlissenen Zustand der mindestens eine Vorsprung (6) teilweise oder vollständig von der Schutzbeschichtung (3) bedeckt ist.

3. Verschleißelement (1) nach einem der vorstehenden Ansprüche, wobei
die Querschnittsfläche des mindestens einen Vorsprungs (6) konstant ist oder in Richtung von der mindestens einen Reibungsfläche (4) zum Basiselement (2) hin und senkrecht zur mindestens einen Reibungsfläche (4) zunimmt.

4. Verschleißelement (1) nach einem der vorstehenden Ansprüche, wobei
der mindestens eine Vorsprung (6) eine konvexe oder konkave Form aufweist, und/oder
der mindestens eine Vorsprung (6) die Form eines Sägezahns, eines Dreiecks, eines Trapezes, einer Nocke oder eines Teils einer Kugel aufweist.

5. Verschleißelement (1) nach einem der vorstehenden Ansprüche, wobei
der mindestens eine Vorsprung (6) integral mit dem Basiselement (2) gebildet ist.

6. Verschleißelement (1) nach einem der Ansprüche 1 bis 4, wobei
der mindestens eine Vorsprung (6) als separates Teil ausgebildet ist, das an einer Oberfläche des Basiselements (2) befestigt ist, um die unebene Oberfläche (7) zu bilden.

7. Verschleißelement (1) nach einem der vorstehenden Ansprüche, wobei
im nicht verschlissenen Zustand die mindestens eine Reibungsfläche (4) einen prozentualen Flächenanteil von 100 % oder weniger, aber von mehr als 0 % umfasst, bestehend aus der Schutzbeschichtung (3), wobei im verschlissenen Zustand der prozentuale Flächenanteil der aus der Schutzbeschichtung (3) besteht, im Vergleich zum nicht verschlissenen Zustand reduziert ist, und/oder wobei
im verschlissenen Zustand die mindestens eine Reibungsfläche (4) einen prozentualen Flächenanteil von mehr als 0% aus dem Material des Basiselements (2) umfasst.

8. Verschleißelement (1) nach einem der vorstehenden Ansprüche, wobei
das Verschleißelement (1) als eine Scheibe mit einer mit der Drehachse konzentrischen Achse konfiguriert ist, wobei zumindest eine Seite der Scheibe, zu welcher die Drehachse senkrecht ausgerichtet ist, als die zumindest eine Reibfläche (4) konfiguriert ist.

9. Reibungsbremse, umfassend
- ein Verschleißelement (1) nach einem der Ansprüche 1 bis 8 und
- ein Reibungsgegenelement (5), welches dazu konfiguriert ist, mit der zumindest einen Reibfläche (4) des Verschleißelements (1) in Reibungskontakt zu kommen.

10. Reibungsbremse nach Anspruch 9, wobei
die mindestens eine Reibfläche (4) ist so konfiguriert, dass sie mit einem Reibungsgegenelement (5) in Kontakt tritt, um die Reibungskraft zwischen dem Verschleißelement (1) und dem Reibungsgegenelement (5) zu übertragen, wobei das Reibungsgegenelement (5) auf die mindestens eine Reibfläche (4) gepresst wird, wobei
die mindestens eine Reibfläche (4) beim Kontakt mit dem Reibungsgegenelement (5) während der Reibungskraftübertragung einem Verschleiß unterliegt.

11. Reibungsbremse nach Anspruch 9 oder 10, wobei
das Verschleißelement (1) als eine Bremsscheibe konfiguriert ist und die zumindest eine Reibfläche (4) dazu konfiguriert ist, mit zumindest einem als Reibungsgegenelement (5) wirkenden Bremsbelag in Reibungskontakt zu kommen.

12. Fahrzeug, insbesondere Nutzfahrzeug, umfassend
- ein Verschleißelement (1) nach einem der Ansprüche 1 bis 8 oder
- eine Reibungsbremse nach einem der Ansprüche 9 bis 11.

13. Verfahren zum Herstellen eines Verschleißelements (1) nach einem der Ansprüche 1 bis 8, wobei das Verfahren die folgenden Schritte umfasst:
- Bereitstellen eines Basiselements (2) mit einer Oberfläche, die mindestens einen Vorsprung (6) zur Bildung einer unebenen Oberfläche (7) aufweist und
- Aufbringen einer Schutzbeschichtung (3) auf die unebene Oberfläche (7), wobei
der mindestens eine Vorsprung (6) teilweise von der Beschichtung (3) bedeckt ist und wobei der mindestens eine Vorsprung (6) und die Beschichtung (3) im nicht verschlissenen Zustand des Verschleißelements (1) eine Reibfläche (4) bilden, die so konfiguriert ist, dass sie mit einem Reibungsgegenelement (5) zur Übertragung der Reibungskraft in Kontakt tritt, oder
wobei der mindestens eine Vorsprung (6) im nicht verschlissenen Zustand des Verschleißelements (1) vollständig von der Beschichtung (3) bedeckt ist und die Beschichtung (3) die Reibfläche (4) bildet.

14. Verfahren nach Anspruch 13, wobei
das Bereitstellen des Basiselements (2) einen Schritt des Gießens des Basiselements (2) und/oder einen Schritt umfasst, bei dem Material des Basiselements (2) entfernt oder hinzugefügt wird, um den mindestens einen Vorsprung (6) zu bilden.

## Revendications

1. - Élément d'usure (1) pour la transmission d'une force de friction, comprenant
un élément de base (2), un revêtement de protection (3) et une surface de friction (4) pour la transmission d'une force de friction, dans lequel
l'élément de base (2) comprend une surface non-uniforme (7) présentant au moins une saillie (6), dans lequel le revêtement de protection (3) est disposé sur la surface non-uniforme (7) de façon à former au moins partiellement la surface de friction (4) dans un état non-usé de l'élément d'usure (1) et
l'élément d'usure (1) comprend un axe de rotation et est configuré pour tourner autour de cet axe, **caractérisé en ce que**
la au moins une saillie (6) est disposée radialement à l'axe de rotation avec une orientation radiale de la au moins une saillie (6).

2. Élément d'usure (1) selon la revendication 1, dans lequel
à l'état non-usé, la au moins une saillie (6) est partiellement ou complètement recouverte par le revêtement de protection (3).

3. Élément d'usure (1) selon l'une des revendications précédentes, dans lequel
la section transversale de la au moins une saillie (6) est constante ou croissante dans une direction allant de la au moins une surface de friction (4) à l'élément de base (2) et perpendiculaire à la au moins une surface de friction (4).

4. Élément d'usure (1) selon l'une des revendications précédentes, dans lequel
la au moins une saillie (6) comprend une forme convexe ou concave, et/ou
la au moins une saillie (6) présente la forme d'une dent de scie, d'un triangle, d'un trapèze, d'une came ou d'une partie d'une sphère.

5. Élément d'usure selon l'une des revendications précédentes, dans lequel
la au moins une saillie (6) est formée d'un seul tenant avec l'élément de base (2).

6. Élément d'usure (1) selon l'une des revendications 1 à 4, dans lequel
la au moins une saillie (6) est formée comme une partie séparée attachée à une surface de l'élément de base (2) pour former la surface non-uniforme (7).

7. Élément d'usure (1) selon l'une des revendications précédentes, dans lequel
à l'état non-usé, la au moins une surface de friction (4) comprend un pourcentage de surface de 100 % ou moins mais supérieur à 0 % constitué du revêtement de protection (3), dans lequel à l'état usé, le pourcentage de surface constitué du revêtement de protection (3) est diminué par rapport à l'état non-usé, et/ou dans lequel
à l'état usé, la au moins une surface de friction (4) comprend un pourcentage de surface supérieur à 0 % du matériau de l'élément de base (2).

8. Élément d'usure (1) selon l'une quelconque des revendications précédentes, dans lequel
l'élément d'usure (1) est configuré comme un disque présentant un axe concentrique à l'axe de rotation, dans lequel au moins un côté du disque, par rapport auquel l'axe de rotation est orienté perpendiculairement, est configuré comme la au moins une surface de friction (4).

9. Frein à friction comprenant :
- un élément d'usure (1) selon l'une des revendications 1 à 8 et
- un contre-élément de friction (5) configuré de façon à venir en contact par friction avec la au moins une surface de friction (4) dudit élément d'usure (1).

10. Frein à friction selon la revendication 9, dans lequel
la au moins une surface de friction (4) est configurée pour venir en contact avec un contre-élément de friction (5) pour la transmission d'une force de friction entre l'élément d'usure (1) et le contre-élément de friction (5), dans lequel le contre-élément de friction est pressé sur la au moins une surface de friction (4), dans lequel
la au moins une surface de friction (4) est sujette à l'usure au contact du contre-élément de friction (5) lors de la transmission de la force de friction.

11. Frein à friction selon la revendication 9 ou 10, dans lequel
l'élément d'usure (1) est configuré comme un disque de frein et la au moins une surface de friction (4) est configurée pour venir en contact par friction avec au moins une plaquette de frein faisant office de contre-élément de friction (5).

12. Véhicule, en particulier véhicule commercial, comprenant
- un élément d'usure (1) selon l'une des revendications 1 à 8 ou
- un frein à friction selon l'une quelconque des revendications 9 à 11.

13. Procédé de production d'un élément d'usure (1) selon l'une des revendications 1 à 8, comprenant les étapes consistant à :
- munir un élément de base (2) d'une surface comprenant au moins une saillie (6) pour former une surface non-uniforme (7) et
- appliquer un revêtement de protection (3) à la surface non-uniforme (7), dans lequel
la au moins une saillie (6) est partiellement recouverte par le revêtement (3) et dans lequel la au moins une saillie (6) et le revêtement (3) forment une surface de friction (4) à l'état non-usé de l'élément d'usure (1) configurée pour venir en contact avec un contre-élément de friction (5) pour la transmission de la force de friction, ou
dans lequel la au moins une saillie (6) est entièrement recouverte par le revêtement (3) dans un état non-usé de l'élément d'usure (1), dans lequel le revêtement (3) forme la surface de friction (4).

14. Procédé selon la revendication 13, dans lequel
la fourniture de l'élément de base (2) comprend une étape de moulage de l'élément de base (2) et/ou une étape, dans laquelle du matériau de l'élément de base (2) est enlevé ou ajouté pour former la au moins une saillie (6).
